# EUROPEAN PATENT SPECIFICATION

(11) **EP 0 511 457 B1**
(45) Date of publication and mention of the grant of the patent: **16.04.1997**
(21) Application number: 92100266.3
(22) Date of filing: 09.01.1992
(51) Int. Cl.: C08G 18/12, C08G 18/10, C08G 18/08, C08G 18/32, C08G 18/62, B01J 13/16

(54) **Cross-linked urethane urea resin dispersion and manufacturing process therefor**
Dispersion eines vernetzten Urethan-Harnstoff-Harzes sowie Verfahren zu deren Herstellung
Dispersion de résine d'uréthane-urée réticulée et son procédé de préparation

(30) Priority: 30.04.1991 JP 98559/91
(43) Date of publication of application: 04.11.1992
(73) Proprietor: DAINIPPON INK AND CHEMICALS, INC., Itabashi-ku Tokyo (JP)
(72) Inventor: Tashiro, Nansei, Sodegaura-shi, Chiba-ken (JP)
(74) Representative: Nöth, Heinz, Dipl.-Phys.

(56) References cited:
- EP-A- 0 404 371
- WO-A-91/11477
- DE-A- 3 139 966
- DE-U- 9 014 684
- FR-A- 2 372 656

## Description

The present invention relates to a new and useful highly cross-linked urethane urea resin dispersed in water, its manufacturing process, and its use. In further detail, using an aqueous self-dispersible resin, a hydrophobic polyisocyanate compound and a multi-functional amine compound, a highly cross-linked urethane urea resin dispersed in water is obtainable, the manufacturing method of which is also included in the details.

Prior art methods are known in which, after an aqueous self-dispersible resin possessing an isocyanate group at the terminal ends of the prepolymer is dispersed in water, the molecules of dispersed prepolymers are elongated or cross-linked by polyamine groups. For example, U.S. Patents 3,770,681 and 3,870,684 both describe manufacturing methods for cross-linked urethane urea resin aqueous dispersed particles. After a linear urethane prepolymer having an isocyanate group at the molecule ends and also possessing a cationic ionomer is dispersed in water, a polyamine having n > 2 is used as the cross-linking particle (where n equals the number of functions). However, in both cases, by the reason that the diameter is larger than 10µm, a stable aqueous dispersion becomes unobtainable.

In U.S. Patent 4,203,883, a method for carrying out the cross-linking of an isocyanate terminal group polymer possessing a carboxyl group and a solid acid value ranging from 17 to 60 by means of polyamines with n > 2 (n = number of functional groups) is disclosed. In addition, U.S. Patent 4,408,008 (which is fundamentally similar to the above-mentioned U.S. Patent 4,203,883) discloses a method of production using two components: an isocyanate prepolymer and a polyamine. The isocyanate prepolymer has both an ionomer of 0∼120 milliequivalents per 100g of of solid, and an ethylene oxide unit of 0.35∼10% by weight. The polyamine has the number n of the functional group in the range of 2.2<n<6.0.

Furthermore, in Japanese Patent Application, 2nd Publication, Number Sho 63-8141, a manufacturing method is disclosed, like in the aforementioned types of manufacturing methods, in which a so-called branched isocyanate terminal group prepolymer, possessing a branching degree m > 2, is used under the combination of polyamine with n=2 (n=number of functions).

In all three of these methods, a small particle diameter results in a stable aqueous dispersion, but one drawback is that limitations exist when trying to decrease the average molecular weight of the cross-bridge intervals.

However, according to the specifications of U.S. Patents 4,203,883 and 4,408,008, fundamentally the minimum average molecular weight of the cross-bridge intervals corresponds to the average molecular weight of the isocyanate terminal group prepolymer. But, when the molecular weight of the prepolymer is decreased, the prepolymer becomes easily soluble in water and an aqueous self-dispersion prepolymer becomes unobtainable.

In U.S. Patent 4,203,883 a method for carrying out the cross-linking of an isocyanate terminal group polymer possessing a carboxyl group and a solid acid value ranging from 17 to 60 by means of polyamines with n > 2 (n = number of functional groups) is disclosed. When attempting to obtain a prepolymer having a low average weight of the cross-bridge intervals, it is necessary that the molecular weight of the prepolymer be maintained by using the method disclosed in Japanese Patent Application, 2nd publication, No. Sho 63-8141, so that the prepolymer is not water-soluble, and the degree of cross-bridging in the prepolymer must be increased. However, if the above-described method is used, the prepolymer will gel prematurely, and therefore there is a limit to the decrease of the average weight of the cross-bridge intervals.

Furthermore, in manufacturing different particle levels for the cross-bridge intervals, each level must be designed and manufactured, which makes the methods extremely inconvenient. In this way the prior art is limited, and in actuality highly useful urethane urea resin particles, which are highly cross-linked and are stable when dispersed in water, cannot be obtained.

The document DE-A-3 139 996 describes a method for producing aqueous dispersions or solutions of polyurethanes, wherein hydrophilic oligourethanes having isocyanate terminal groups are dispersed or dissolved in water and, preferably at the same time, treated with hydrazine or polyamines to be converted to oligourethanes having amino terminal groups, after which the oligourethane, dispersed or dissolved in water, is chain-extended by means of di- or polyfunctional chain extenders, such as hydrophobic liquid diisocyanates, capable of reacting with amino groups. An excess of isocyanate in the last step leads to isocyanate cross-linking, whereas an excess of amine leads to a cross-linked polymer having terminal amino groups that may subsequently be neutralized with an acid. The obtained dispersion is used for producing coatings on flexible or non-flexible substrates.

The document WO-A-91/11477 describes a process for producing polyurethane dispersions by reacting a urethane prepolymer containing acid and isocyanate groups with a polyamine to form a prepolymer containing primary and/or secondary amino groups, the latter prepolymer being transferred to water and neutralized with a tertiary amine, and subsequently chain extended by reaction with a polyisocyanate. When the neutralized prepolymer containing primary and/or secondary amino groups or the polyisocyanate is at least trifunctional, cross-linked particles are obtained. Any solvent used or remaining can be distilled off under vacuum before or after the chain extending. The dispersions are suitable for producing coating compositions for metal, plastics, wood, paper, glass etc.

Thus, in order to obtain a highly cross-linked urethane urea resin particle without using any surfactant, that is stable when dispersed in water, the inventors of the present invention have done extensive research. Consequently, an object of the present invention is to break through the above-mentioned existing problems and to provide a highly useful crosslinked urethane urea resin particle that is highly cross-linked and is stable when dispersed in water.

Fundamentally, an object of the present invention is to provide a cross-linked urethane urea resin particle, that is stable when added to water. Namely, the present invention attempts to offer a highly crosslinked urethane urea resin particle, being formed from an aqueous self-dispersible resin having an isocyanate group at the terminal ends of the molecule, a polyisocyanate prepolymer and a multi-functional amine compound using no surfactant. At the same time, the object of the present invention is also to provide a method for the manufacturing of this cross-linked urethane urea resin particle which is stable in water.

Consequently, as a result of the particle diameter being equal to or less than 1µm at the emulsion level, the aqueous cross-linked urethane urea resin dispersion, disclosed in the present invention, is stable in water. Additionally, the film which can be made from these particles is superior in that it displays resistance to solvents and is also waterproof. The cross-linked urethane urea resin particle provided by the present invention is especially useful in paints, inks, binding agents as well as in paper filter processing agents.

By utilizing a "microscopic capsule manufacturing process" the inventors of the present invention were able to solve the problems existing in the prior art. The method adopted in this fundamental solution scheme is described in the following.

Specifically, when manufacturing an urethane urea highly cross-linked particle without using any surfactant, that is stable when dispersed in water, the following three advantages are achieved.
1) The average molecular weight of the cross-bridge intervals can be decreased.
2) When establishing the different levels of the average molecular weight of the cross-bridge intervals, it is not necessary to design or to manufacture the isocyanate prepolymer each time.
3) The weight of the ionomer within the crosslinked particles can be decreased.

In the following an outline of the aforementioned method, actually consisting of four procedures, is given.

### Mixing Procedure:

A hydrophobic polyisocyanate prepolymer is blended with the aqueous self-dispersible resin.

### Capsule Particle Formation Procedure:

The blended compounds are then gradually added to the stirred water. The reverse, ie. adding the water to the stirred blended compounds gradually, can also be done.

### Cross-linking Particle Formation Procedure:

Following this, polyamine is used as a cross-linking agent.

### Solvent Removal Procedure:

In the final stage, the solvent which was added in the initial mixing process, is removed under reduced pressure.

Using the above-mentioned procedures, a urethane urea cross-linked particle that acts as a stable dispersion in water can be easily obtained using no surfactant. In this specification, the above-mentioned aqueous self-dispersible resin denotes a resin having the property of spontaneously forming a stable aqueous dispersion, without requiring the use of any surfactants, owing to the existence of hydrophilic groups in the resin.

The approximate molecular weight of the above-mentioned aqueous self-dispersible resin (a number average molecular weight (Mn)) is 2,000 - 100,000, but appropriate weights are preferably within the 3,000 - 30,000 range. Moreover, the above-mentioned aqueous self-dispersible resin is used in a diluted solution form after being dissolved in an organic solvent.

Obviously, there must not be any reactivity between aqueous self-dispersible resin and the polyisocyanate prepolymers to be capsulated. Polyether groups, oxazoline groups, cyclocarbonate group, phosphoric ester groups, sulfonic acid groups, tertiary amine groups, carboxyl groups and their neutral salts are the only examples of commonly employed hydrophilic groups.

The type of resin having these aqueous self-dispersible properties, known as a dispersion type resin, is not in particular a novel substance. However, a variety of dispersion resins such as urethane, acrylic and epoxy resins are being produced and applied to such uses as in inks, paints, fiber processing agents and adhesive agents.

For example, beginning with each kind of resin type such as: the urethane group disclosed in U.S. Patent 4,066,591; the acrylic group disclosed in GB Patent 2,039,497; the polyester group disclosed in U.S. Patents 4,179,428 and 4,753,995; the epoxy group disclosed in Japanese Patents, 2nd Publication, Numbers 60-4964 and 62-13384; the epoxy acrylic group disclosed in U.S. Patents 4,212,781 and 4,480,058; or the vinyl chloride acetate and vinyl copolymer groups disclosed in U.S. Patent 4,451,682, each named resin type is noted in numerous documents such as in "Progress in Organic Coatings" (No. 9 (1981) pp. 281-340) and in "Non-Polluting Coatings and Coating Process" (PLENUM PRESS: New York (1973)).

Depending on the introduction of a required amount of more than one hydrophilic group in a molecule, the microscopic particle is dispersed in water, but this required amount is determined by factors such as the type of hydrophilic group and the combination of the groups. The introduction of a carboxyl group as the hydrophilic group makes the balancing and controlling of a variety of features easy to obtain.

In this case, the solid acid value will become 15 - 100, and will fall preferably within the 20 - 60 range. Therefore, vinyl, ester and urethane groups are the most preferred types of resins possessing these hydrophilic groups. Additionally, these resins have an isocyanate group at the terminal ends of the molecule.

In this manner, the aqueous self-dispersible resin is bonded with the capsulated hydrophobic polyisocyanate prepolymer by means of the amine cross-linking agent, and forms a shell-core bonding and cross-linked particle.

The hydrophobic polyisocyanate prepolymer is a molecule with a relatively low molecular weight, containing two or more isocyanate functions, and by itself is insoluble and cannot be dispersed in water. Moisture-curable urethane resin is one of the common prepolymers among various hydrophobic polyisocyanate prepolymers. These can be obtained by means of a reaction involving urethane, in which polyols such as trimethyl propane and ethylene glycol, as well as polyol prepolymers such as polyetherpolyol and polyesterpolyol, and diisocyanates such as toluene diisocyanate, 1,6-hexane diisocyanate, and isophorone diisocyanate are used as raw materials under the conditions -OH_{eq} / -NCO_{eq} < 1. Usually, the number average molecular weight of the prepolymer lies within the 2,000 - 6,000 range and the average number of functional groups ranges from 2 - 4.

Besides these prepolymers, other various types of polyisocyanate prepolymers are also given as hardeners for a two component urethane resin in the field of paint. Among these are products from an additional reaction of diisocyanate monomers such as toluene diisocyanate, 1,6-hexane diisocyanate or isophorone diisocyanate, and the polyol such as trimethylpropane and ethylene glycol; allophanation or trimerization products of diisocyanate usually have a number average molecular weight within the range of 600 - 1000 and possess 4 - 6 functional groups.

With regard to the mixing ratio of the aqueous self-dispersible resin and the hydrophobic polyisocyanate prepolymer, the percent weight of the hydrophobic polyisocyanate prepolymer (wt%) is preferably within the range of 5 < wt% ≤ 40, but not outside of the range 0 < wt% ≤ 60. If the percent weight surpasses 60%, the capsulization process becomes very difficult. The particle diameter also increases, surpassing 1 µm: both of these results hinder the stable dispersion in water and are thus undesirable. In the Examples of the present invention, an aqueous self-dispersible resin possessing the aforementioned isocyanate group (number average molecular weight 3000 - 5000, and average number of functional groups greater than or equal to two) is employed: additionally a hydrophilic polyisocyanate prepolymer having a large number of functional groups is also utilized. After a resin with a small molecular weight has been prepared, depending on its use and on the changing of both mixing ratios, the average molecular weight of the cross-bridge intervals inside of the cross-linked urethane urea particle to be formed can be increased, and can be changed very easily. Furthermore, changes can also be made in accordance with the differences between the number of functional groups of the amine cross-linking agent.

Hydrazine, ethylene diamine, diethylenetriamine, triethylenetetramine and tetraethylenepentamine are a few of the most commonly used cross-linking agents in the cross-linking particularization process. Additionally, in a reaction with isocyanate, it is desirable to have a water soluble polyamine possessing two or more functional groups.

The average content of the ionomer of the crosslinked urethane urea particle obtained in this manner is reduced only by the amount of hydrophobic polyisocyanate prepolymer used to form the particle. In forming this particle, an aqueous self-dispersible resin which contains an ionomer with a necessary weight for self-dispersal, and a hydrophobic polyisocyanate prepolymer which does not contain an ionomer, are utilized: the weight of the hydrophobic polyisocyanate prepolymer depends on the aforementioned necessary weight, up to a percent weight of 60%.

When the above-mentioned particle is used, the hygroscopicity of the particle decreases and the moisture absorption property increases; owing to this the weight of the hydrophobic ionomer also decreases.

In the manufacturing of an aqueous self-dispersion of a cross-linked urethane urea particle disclosed in the present invention, there are two basic aspects which are characteristic of the present invention: (1) utilization of a hydrophobic polyisocyanate prepolymer and (2) a "microscopic capsule" process, as previously filed by the inventor of the present invention, which is employed to efficiently manufacture a variety of cross-linking levels in order to make this utilization of the prepolymer possible. As well, the particle resulting from the present invention additionally displays advantages such as increased resistance to both water (waterproof) and to solvents.

In the following the present invention will be more concretely explained through the use of Examples and a Comparative Example. Hereinafter, unless otherwise noted, all "parts" represent parts by weight and "%" represents percent by weight.

### Synthesis Example 1 (Synthesis of an aqueous self-dispersible urethane resin having an Isocyanate group at the terminal ends of the molecule)

293 parts of "Unisef PT-200" (Nihon Yushi Co. manufactured polytetramethylenglycol; molecular weight = 2,000) and 77 parts of isophoronediisocyanate are heated in a flask at a maximum temperature of 120°C for 30 minutes while under nitrogen seal. After this time period, 0.05 parts of tin octenate are added, and after one hour the temperature is dropped to 80°C. After this, 210 parts of MEK and 20 parts of dimethylolpropionic acid are added and the reaction is allowed to continue at a temperature of 75°C for five hours. In this process, there is no rising of the viscosity nor is there a decrease in the isocyanate content ratio: a resin with a desired viscosity of W possessing a nonvolatile content of 65%, a solution acid value of 13 and an isocyanate content ratio of 0.9% was obtained. This is termed A-1.

### Synthesis Example 2 (Synthesis of an aqueous self-dispersible urethane resin having an isocyanate group at the terminal ends of the molecule)

To a flask, 200 parts of "Unisef PT-200" and 52.2 parts of toluene diisocyanate were added and agitated under nitrogen seal for 30 minutes at a temperature of 100°C. Following this, 266 parts of ethyl acetate were added into the flask, and the temperature was reduced to 75°C. 26.8 parts of dimethylolpropionic acid were then added and a temperature of 75°C was maintained for one hour. Following this, 0.05 parts of dibutyl-tin-dilaurate were added and the mixture was kept at the same temperature (75°C) for six hours.
Rising of the viscosity and lowering of the isocyanate content ratio did not occur any more, and a resin with a desired viscosity of N possessing a nonvolatile content of 50%, a solution acid value of 10.5 and an isocyanate content ratio of 1.5% was obtained. This is termed A-2.

### Synthesis Example 3 (Synthesis of an aqueous self-dispersible urethane resin having an isocyanate group at the terminal ends of the molecule)

To a flask, 200 parts of "Unisef PT-200" and 75 parts of diphenylmethane diisocyanate were added and agitated under nitrogen seal at a maximum temperature of 100°C for 30 minutes. After this, 390 parts of ethyl acetate were added to the mixture and the temperature of the mixture was lowered to 75°C. 26.8 parts of dimethylolpropionic acid were then added and a temperature of 75°C was maintained for one hour. Following this, 0.05 parts of dibutyl-tin-dilaurate were added and the mixture was kept at the same temperature (75°C) for five hours. After that there was no rising of the viscosity nor was there any decrease in the isocyanate content ratio, and a resin with a desired viscosity of W possessing a nonvolatile content of 42%, a solution acid value of 8.5 and an isocyanate content value of 1.2% was obtained. This is termed A-3.

Listed below are the three types of hydrophobic polyisocyanate prepolymer that were employed.
1. "Burnock DM-652" (Dainippon Ink and Chemicals, Inc. manufactured moisture curable polyisocyanate prepolymer; nonvolatile content = 42%, viscosity = C, isocyanate content ratio = 3.5%).
2. "Burnock N-950" (Dainippon Ink and Chemicals, Inc. manufactured 2-component urethane paint hardener, TMP/HMDI adduct form polyisocyanate prepolymer; nonvolatile content = 75%, viscosity = M, isocyanate content ratio = 12.5%).
3. "Burnock DN-980" (Dainippon Ink and Chemicals, Inc. manufactured 2-component urethane paint hardener, HMDI trimerized polyisocyanate prepolymer; nonvolatile content = 75%, viscosity = A-1, isocyanate content ratio = 16.0%).

In the following Examples cross-linked urethane-urea particles dispersed in water are obtained. Each dispersion is applied as a coating and dried to form a film. By observing the above-mentioned film after it has been dipped into MEK for 5 minutes, confirmation of whether an insoluble film has formed or not can be carried out.

### Example 1

The starting mixture consists of 200 parts of A-1, 100 parts of "Burnock DM-652" and 100 parts of MEK and this mixture is added to a stirred aqueous solution of 600 parts water, 5 parts TEA and 3.60 parts DETA. The stable aqueous dispersion obtained has a nonvolatile content of 25%, a particle diameter of 1µm or less, and has a dispersing stability of 60 or more days. After being applied as a coating and dried at room temperature, the formation of a film insoluble in MEK was confirmed.

### Example 2

The starting mixture consists of 200 parts A-1, 20 parts "Burnock DN-980", and 80 parts MEK, and this collective mixture is added to a solution of 500 parts water, 5.0 parts TEA, and 3.40 DETA. The stable aqueous dispersion obtained has a nonvolatile content of 30%, a particle diameter of 1µm or less, and a dispersing stability of 60 days or more. Similarly, after being applied as a coating and dried at room temperature, the formation of a film insoluble in MEK was confirmed.

### Example 3

The starting mixture consists of 200 parts A-1, 35 parts "Burnock DN-980" and 95 parts MEK, and this mixture is added to a solution of 500 parts water, 5.0 parts TEA, and 5.40 parts triethylenetetramine in place of DETA. The stable aqueous dispersion obtained has a nonvolatile content of 33%, a particle diameter of 1µm or less, and a dispersing stability of 60 days or more. After coating and drying at room temperature, the formation of a film insoluble in MEK was confirmed, during this time period evidence of expansion was also observed.

### Example 4

The starting material consists of 200 parts A-1, 116 parts "Burnock DN-980", and 100 parts MEK and is added to a solution of 600 parts water, 5.0 parts TEA, and 12 parts DETA. The stable aqueous dispersion obtained has a nonvolatile content of 31%, a particle diameter of 1µm or less, and has a dispersing stability of 60 days or more. After coating and drying at room temperature, the formation of a film insoluble in MEK was again confirmed and evidence of expansion was observed.

### Example 5

The starting mixture consists only of 26.4 parts A-2 and 4.4 parts "Burnock DN-980" and is added to a solution of 200 parts water, 0.51 parts TEA and 0.63 parts DETA. The stable aqueous dispersion obtained has a nonvolatile content of 33.5%, a particle diameter of 1µm or less and a dispersing stability of 60 days or more. After coating and drying at room temperature, a film insoluble in MEK formed, but this film lacked toughness. However, after heat treating the film for 5 minutes at a temperature of 180°C, the film abruptly displayed a high toughness in addition to being insoluble in MEK.

### Example 6

The starting mixture consists of 26.4 parts A-2 and 11.7 parts "Burnock DN-980", and this mixture is added to a solution of 200 parts water, 0.51 parts TEA and 1.36 parts DETA. The stable aqueous dispersion obtained has a nonvolatile content of 17.0%, a particle diameter of 1µm or less, and displays a dispersing stability of 60 or more days. As in Example 5, after coating and drying at room temperature a film insoluble in MEK was obtained, however this film again lacked toughness. After heat-treating the film, as in Example 5 (180°C for 5 minutes), a high toughness was suddenly observed in addition to the film being insoluble in MEK.

### Example 7

The starting mixture consists of 34 parts A-3 and 4.76 parts "Burnock DN-980", and this mixture is added to a solution of 200 parts water, 0.50 parts TEA and 0.73 parts DETA. The stable aqueous dispersion obtained has a nonvolatile content of 16.8% and a particle diameter of 1µm or less, and displays a dispersing stability of 60 or more days. The film obtained after coating displayed similar characteristics to that obtained in Examples 4, 5 and 6.

### Comparative Example 1

A starting mixture consisting of 200 parts A-1 and 50 parts MEK is added to a solution of 5.0 parts TEA and 1.40 parts DETA. The stable aqueous dispersion obtained has a nonvolatile content of 32% and a particle diameter of 1µm or less, and displays a dispersing stability of 60 or more days. A film is formed in a similar manner, after coating and drying the element at room temperature: this film is slightly insoluble in water and displays adhesive properties as well.

The urethane urea aqueous dispersions obtained in examples 1-7 and in Comparative Example 1 were coated onto a steel plate to a drying thickness of 20µm. After the setting, a variety of samples are obtained following application of a heat treatment at a temperature of 180°C for 20 minutes.

After the above-mentioned procedures were completed, an assessment of the chemical resistance of each of the sample coating films was performed. The results of these assessments are shown in Table 1. Furthermore, the provisions of the assessment tests as well as the test summaries are provided in the following.
Resistance to alkali... This test was performed by dipping the sample into a 5% aqueous solution of sodium hydroxide for 100 hours.
Resistance acid... This test was performed by dipping the sample into 35% aqueous solution of sulfuric acid for 100 hours.
Resistance to water... This test was performed by dipping the sample into boiling water for 2 hours.

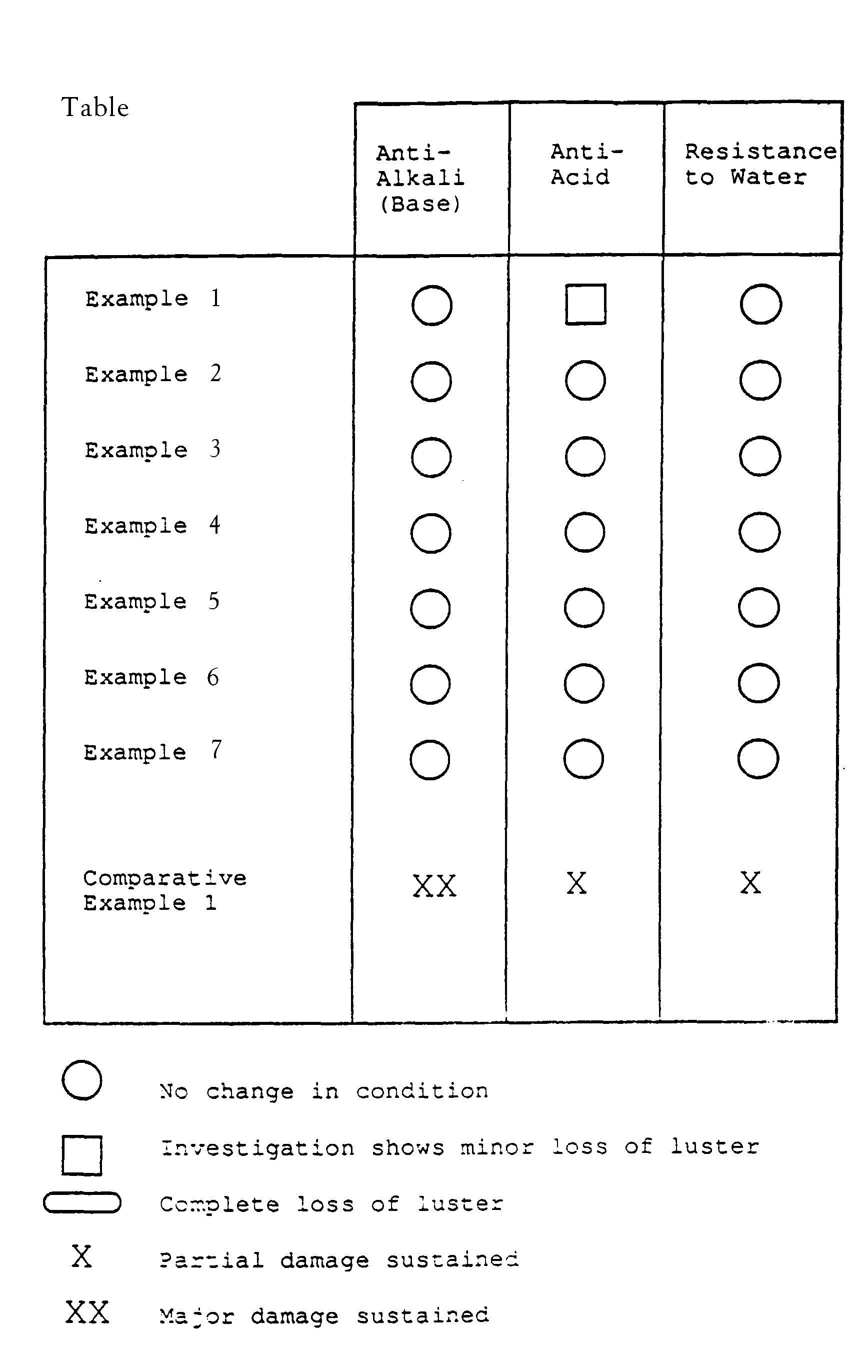

Consequently, there are a number of special aspects which are characteristic of the present invention. First, the molecular weight of the cross-bridge intervals contained in the particle can be lowered, and because of this, the particle has the ability to expand slightly in addition to possessing an increased resistance to solvents. A second characteristic of the present invention is in the regulation of the levels of the cross-bridge intervals molecular weight, there is no need to create and design the cross-bridge levels each time. Additionally, depending on the amount of the hydrophobic resin to be made into the polyisocyanate prepolymer, the hydrophilic group contained in the particle is reduced by only this portion, and as a result of the use of this hydrophobic resin, the waterproof property increases.

These above mentioned various results can be easily obtained and the particle obtained in this manner has a number of uses such as in the raw material for coatings, ink, adhesive agents and paper filter processing agents. In addition, the particle obtained in this manner also has special uses such as in a rheology control agent.

In an industrial line where the aqueous solubilization of paints is carried out, especially when producing such coatings as those used for coating automobiles and cans, as well as for precoating metals (PCM), the coating obtained through the present invention can be used as the primer, the intermediate coat, or the upper coat.

## Claims

1. A dispersion of a cross-linked urethane urea resin formed from a self-dispersible resin having an isocyanate group at the terminal ends of the molecule, a polyisocyanate prepolymer, and a multi-functional amine compound, said polyisocyanate prepolymer being not more than 60 % by weight of the self-dispersible resin and the polyisocyanate prepolymer, said dispersion having a particle size of 1 µm or less, characterized in that said polyisocyanate prepolymer is microencapsulated and said dispersible resin is bonded with the encapsulated polyisocyanate prepolymer by means of said multi-functional amine forming cross-linked particles having a core-shell bonding.

2. A particle of the dispersion of claim 1, characterized in that said polyisocyanate prepolymer is hydrophobic.

3. A method for manufacturing a particle of a cross-linked urethane urea resin from a self-dispersible resin having an isocyanate group at the terminal ends of the molecule, a polyisocyanate prepolymer, and a multi-functional amine compound without using any surfactant, said polyisocyanate prepolymer being not more than 60 % by weight of the self-dispersible resin and the polyisocyanate prepolymer, characterized by forming a microencapsulated polyisocyanate prepolymer in water from a mixture of said self-dispersible resin and said polyisocyanate prepolymer, and adding the multi-functional amine compound.

4. A dispersion according to claim 1, characterized in that said self-dispersible resin contains a carboxyl group within a resin component and has a solid acid value of 15 or greater.

5. A method according to claim 3, characterized by using a self-dispersible resin containing a carboxyl group within a resin component and having a solid acid value of 15 or greater.

6. A dispersion according to claim 1, characterized in that said self-dispersible resin contains an isocyanate group within a resin component.

7. A method according to claim 3, characterized by using a self-dispersible resin containing an isocyanate group within a resin component.

8. A dispersion according to claim 1, characterized in that the number average molecular weight (Mn) of said polyisocyanate prepolymer is in the range of 600 < Mn < 6000 and the average number of isocyanate groups (N) is in the range of 2 < N < 6.

9. A method according to claim 3, characterized in that the number average molecular weight (Mn) of said polyisocyanate prepolymer is in the range of 600 < Mn < 6000 and the average number of isocyanate groups (N) is in the range of 2 < N < 6.

10. A method for manufacturing a particle of a cross-linked urethane urea resin from a self-dispersible resin having an isocyanate group at the terminal ends of the molecule, a polyisocyanate prepolymer, and a multifunctional amine compound without using any surfactant, characterized by
a) blending the polyisocyanate prepolymer with the self-dispersible resin,
b) dropping the blended compounds into water to form capsule particles,
c) adding a cross-linking agent to the water, and
d) removing solvent.

11. A method for manufacturing a particle of a cross-linked urethane urea resin from a self-dispersible resin having an isocyanate group at the terminal ends of the molecule, a polyisocyanate prepolymer, and a multi-functional amine compound without using any surfactant, characterized by
a) blending the polyisocyanate prepolymer with the self-dispersible resin,
b) dropping water into the blended compounds to form capsule particles,
c) adding a cross-linking agent to the water; and
d) removing solvent.

12. Use of the dispersion of a cross-linked urethane urea resin of claim 1 in paints, inks, adhesives or paper-pulp binding agents.

## Patentansprüche

1. Dispersion eines vernetzten Urethan-Harnstoff-Harzes, die aus einem selbstdispergierbaren Harz mit einer Isocyanatgruppe an den Abbruchenden des Moleküls, einem Polyisocyanatvorpolymer und einer multifunktionellen Aminverbindung hergestellt worden ist, wobei das Vorpolymer nicht mehr als 60 Gew.-% des selbstdispergierbaren Harzes und des Polyisocyanatvorpolymers ausmacht und die Dispersion eine Teilchengröße von 1 µm oder weniger aufweist, dadurch gekennzeichnet, daß das Polyisocyanatvorpolymer mikroverkapselt ist und das dispergierbare Harz mit dem verkapselten Polyisocyanatvorpolymer mittels des multifunktionellen Amins unter Bildung vernetzter Teilchen mit einer Kern-Schalenbindung verbunden ist.

2. Ein Teilchen der Dispersion des Anspruchs 1, dadurch gekennzeichnet, daß das Polyisocyanatvorpolymer hydrophob ist.

3. Verfahren zur Herstellung eines Teilchens eines vernetzten Urethan-Harnstoff-Harzes aus einem selbstdispergierenden Harz mit einer Isocyanatgruppe an den Abbruchenden des Moleküls, einem Polyisocyanatvorpolymer und einer multifunktionellen Aminverbindung, ohne Einsatz eines oberflächenaktiven Mittels, wobei das Polyisocyanatvorpolymer nicht mehr als 60 Gew.-% des selbstdispergierbaren Harzes und des Polyisocyanatvorpolymers ausmacht, gekennzeichnet durch Bilden eines mikroverkapselten Polyisocyanatvorpolymers in Wasser aus einer Mischung aus dem selbstdispergierbaren Harz und dem Polyisocyanatvorpolymer und Zugeben der multifunktionellen Aminverbindung.

4. Dispersion nach Anspruch 1, dadurch gekennzeichnet, daß das selbstdispergierbare Harz eine Carboxylgruppe innerhalb einer Harzkomponente enthält und eine Festsäurezahl von 15 oder mehr aufweist.

5. Verfahren nach Anspruch 3, gekennzeichnet durch die Verwendung eines selbstdispergierbaren Harzes welches eine Carboxylgruppe innerhalb einer Harzkomponente enthält und eine Festsäurezahl von 15 oder mehr aufweist.

6. Dispersion nach Anspruch 1, dadurch gekennzeichnet, daß das selbstdispergierbare Harz eine Isocyanatgruppe innerhalb einer Harzkomponente enthält.

7. Verfahren nach Anspruch 3, gekennzeichnet durch die Verwendung eines selbstdispergierbaren Harzes, welches eine Isocyanatgruppe innerhalb einer Harzkomponente enthält.

8. Dispersion nach Anspruch 1, dadurch gekennzeichnet, daß das Zahlenmittel des Molekulargewichtes (Mn) des Polyisocyanatvorpolymers im Bereich von 600 < Mn < 6000 liegt und die durchschnittliche Anzahl von Isocyanatgruppen (N) im Bereich von 2 < N < 6 liegt.

9. Verfahren nach Anspruch 3, dadurch gekennzeichnet, daß das Zahlenmittel des Molekulargewichtes (Mn) des Polyisocyanatvorpolymers im Bereich von 600 < Mn < 6000 liegt und die durchschnittliche Anzahl von Isocyanatgruppen (N) im Bereich von 2 < N < 6 liegt.

10. Verfahren zur Herstellung eines Teilchens eines vernetzten Urethan-Harnstoff-Harzes aus einem selbstdispergierbaren Harz mit einer Isocyanatgruppe an den Abbruchenden des Moleküls, einem Polyisocyanatvorpolymer und einer multifunktionellen Aminverbindung, ohne Einsatz eines oberflächenaktiven Mittels, gekennzeichnet durch
a) Vermischen des Polyisocyanatvorpolymers mit dem selbstdispergierbaren Harz,
b) Eintropfen der vermischten Verbindungen in Wasser zur Bildung von Kapselteilchen,
c) Zugeben eines Vernetzungsmittels zum Wasser, und
d) Entfernen von Lösungsmittel.

11. Verfahren zur Herstellung eines Teilchens eines vernetzten Urethan-Harnstoff-Harzes aus einem selbstdispergierbaren Harz mit einer Isocyanatgruppe an den Abbruchenden des Moleküls, einem Polyisocyanatvorpolymer und einer multifunktionellen Aminverbindung, ohne Einsatz eines oberflächenaktiven Mittels, gekennzeichnet durch
a) Vermischen des Polyisocyanatvorpolymers mit dem selbstdispergierbaren Harz,
b) Eintropfen von Wasser in die vermischten Verbindungen zur Bildung von Kapselteilchen,
c) Zugeben eines Vernetzungsmittels zum Wasser, und
d) Entfernen von Lösungsmittel.

12. Verwendung der Dispersion eines vernetzten Urethan-Harnstoff-Harzes des Anspruchs 1 in Anstrichfarben, Druckfarben, Klebstoffen oder Bindemitteln für Papierpulpe.

## Revendications

1. Dispersion d'une résine uréthane-urée réticulée formée d'une résine auto-dispersable ayant un groupe isocyanate aux extrémités terminales de la molécule, un prépolymère polyisocyanate et un composé aminé multifonctionnel, la quantité dudit prépolymère polyisocyanate n'étant pas supérieure à 60% en poids de la quantité de résine auto-dispersable et du prépolymère polyisocyanate, ladite dispersion ayant une dimension de particules égale ou inférieure à 1 µm, caractérisée en ce que ledit prépolymère polyisocyanate est sous forme de microcapsules et que ladite résine dispersable est liée à ce prépolymère polyisocyanate encapsulé au moyen de ladite amine multifonctionnelle formant des particules réticulées ayant une liaison âme-gaine.

2. Particule de la dispersion selon la revendication 1, caractérisée en ce que ledit prépolymère polyisocyanate est hydrophobe.

3. Procédé pour fabriquer une particule de résine d'uréthane-urée réticulée à partir d'une résine auto-dispersable ayant un groupe isocyanate aux extrémités terminales de la molécule, d'un prépolymère polyisocyanate et d'un composé aminé multifonctionnel sans utiliser aucun agent tensioactif, la quantité dudit prépolymère polyisocyanate n'étant pas supérieure à 60% en poids de la résine auto-dispersable et du prépolymère polyisocyanate, caractérisé par la formation d'un prépolymère polyisocyanate en microcapsules dans l'eau à partir d'un mélange de ladite résine auto-dispersable et dudit prépolymère polyisocyanate, et par l'addition d'un composé aminé multifonctionnel.

4. Dispersion selon la revendication 1, caractérisée en ce que ladite résine auto-dispersable contient un groupe carboxyle à l'intérieur d'un composant de résine et a un indice d'acide des solides de 15 ou davantage.

5. Procédé selon la revendication 3, caractérisé par l'utilisation d'une résine auto-dispersable contenant un groupe carboxyle à l'intérieur d'un composant résine et ayant un indice d'acide des solides de 15 ou davantage.

6. Dispersion selon la revendication 1, caractérisée en ce que ladite résine auto-dispersable contient un groupe isocyanate à l'intérieur d'un composant résine.

7. Procédé selon la revendication 3, caractérisé par l'utilisation d'une résine auto-dispersable contenant un groupe isocyanate à l'intérieur d'un composant résine.

8. Dispersion selon la revendication 1, caractérisée en ce que le poids moléculaire moyen en nombre (Mn) dudit prépolymère polyisocyanate est compris entre 60 et 6000 et que le nombre moyen de groupes isocyanates (N) est compris entre 2 et 6.

9. Procédé selon la revendication 3, caractérisé en ce que le poids moléculaire moyen en nombre (Mn) dudit prépolymère polyisocyanate est compris entre 600 et 6000 et le nombre moyen de groupes isocyanates (N) est compris entre 2 et 6.

10. Procédé pour fabriquer une particule d'une résine uréthane-urée réticulée à partir d'une résine auto-dispersable ayant un groupe isocyanate aux extrémités terminales de la molécule, d'un prépolymère polyisocyanate et d'un composé aminé multifonctionnel sans utiliser aucun agent tensioactif, caractérisé en ce que :
(a) on mélange le prépolymère polyisocyanate avec la résine auto-dispersable;
(b) on laisse tomber les composés mélangés dans l'eau pour former des particules en capsules;
(c) on ajoute un agent de réticulation à l'eau; et
(d) on élimine le solvant.

11. Procédé pour fabriquer une particule d'une résine uréthane-urée réticulée à partir d'une résine auto-dispersable ayant un groupe isocyanate aux extrémités terminales de la molécule, d'un prépolymère polyisocyanate et d'un composé aminé multifonctionnel sans utiliser aucun agent tensioactif, caractérisé en ce que :
(a) on mélange le prépolymère polyisocyanate avec la résine auto-dispersable;
(b) on laisse tomber de l'eau dans les composés mélangés pour former des particules en capsules;
(c) on ajoute un agent de réticulation à l'eau; et
(d) on élimine le solvant.

12. Utilisation de la dispersion d'une résine uréthane-urée selon la revendication 1, dans des peintures, des encres, des adhésifs ou des agents de liaison de la pâte à papier.
